Europäisches Patentamt

European Patent Office

Office européen des brevets

(19)

(11) Publication number: **0 386 251**

**A1**

(12) **EUROPEAN PATENT APPLICATION**
**published in accordance with Art.**
**158(3) EPC**

(21) Application number: 89908275.4

(22) Date of filing: **05.07.89**

(86) International application number:
**PCT/JP89/00677**

(87) International publication number:
**WO 90/00461 (25.01.90 90/03)**

(51) Int. Cl.⁵: **B23Q 33/00**

(30) Priority: **15.07.88 JP 174923/88**

(43) Date of publication of application:
**12.09.90 Bulletin 90/37**

(84) Designated Contracting States:
**DE FR GB IT**

(71) Applicant: **FANUC LTD**
**3580, Shibokusa Aza-Komanba Oshino-mura**
**Minamitsuru-gun Yamanashi 401-05(JP)**

(72) Inventor: **MATSUURA, Hitoshi,Keioh-Yamada**
**Manshon 1-406**
**412-7, Midori-cho,Hachioji-shi**
**Tokyo 193(JP)**
Inventor: **ARAMAKI, Hitoshi**
**320-56, Hino,Hino-shi**
**Tokyo 191(JP)**

(74) Representative: **Billington, Lawrence Emlyn**
**Haseltine Lake & Co Hazlitt House 28,**
**Southampton Buildings Chancery Lane**
**London WC2A 1AT(GB)**

(54) PROFILE CONTROL METHOD.

(57) When a stylus (1) is long, the proportional relation between an actual quantity x of displacement and a quantity y of displacement detected by a tracer head (2) is lost, so that an accurate profile control operation cannot be carried out. Therefore, when a long stylus is used, the detected quantity y of displacement is corrected by using a correction function f(x) which is determined in advance, to determine a corrected quantity y' of displacement which is proportional to the actual quantity x of displacement, a profile control operation being carried out on the basis of the corrected quantity y' of displacement thus obtained.

FIG. I (a)

FIG. I (b)

TITLE MODIFIED
see front page

DESCRIPTION

TRACER CONTROL METHOD

Technical Field

This invention relates to a tracer control method and, more particularly, to a tracer control method through which a displacement detection error (topple error) resulting from a longer tracer head is capable of being corrected.

Background Art

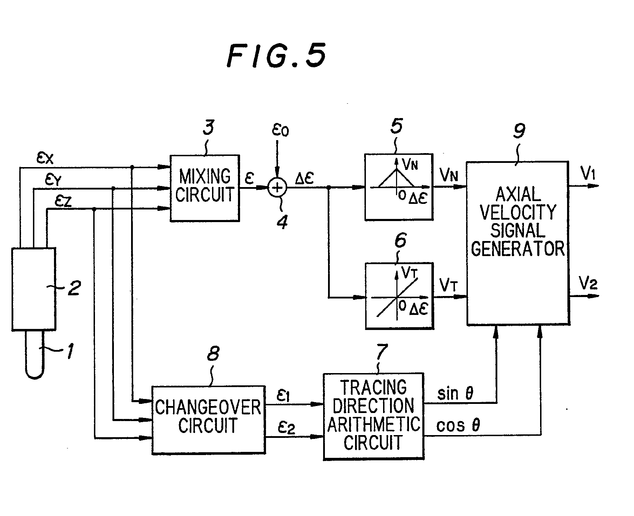

As shown in Fig. 5, tracer control usually involves detecting axial displacements $\varepsilon_x$, $\varepsilon_y$, $\varepsilon_z$ of a stylus 1, which is in contact with a model, by means of a tracer head 2, computing a resultant displacement $\varepsilon$ (where $\varepsilon = \sqrt{\varepsilon_x^2 + \varepsilon_y^2 + \varepsilon_z^2}$) obtained by combining the axial displacements by means of a mixing circuit 3, obtaining an error $\Delta\varepsilon$ between the resultant displacement $\varepsilon$ and a reference displacement $\varepsilon_0$ by an adder circuit 4, generating a normal-direction velocity signal $V_N$ in a velocity signal generator 5 based on the $\Delta\varepsilon$-$V_T$ characteristic, and generating a tangent-direction velocity signal $V_T$ in a velocity signal generator 6 based on the $\Delta\varepsilon$-$V_T$ characteristic. Meanwhile, a tracing direction arithmetic circuit 7 generates $\cos\theta$ and $\sin\theta$ in a tracing direction $\theta$ using axial displacements $\varepsilon_1$, $\varepsilon_2$ lying in a tracer control plane and outputted by a changeover circuit 8, and an axial velocity signal generator 9 generates axial velocities $V_1, V_2$ in the tracer control plane using $V_N$, $V_T$, $\cos\theta$ and $\sin\theta$,

thereby moving the stylus 1 along the model. Similar processing is subsequently repeated to execute tracer control. If the tracer control plane is the X-Z plane, then $\varepsilon_1 = \varepsilon_x$, $\varepsilon_2 = \varepsilon_z$ will hold.

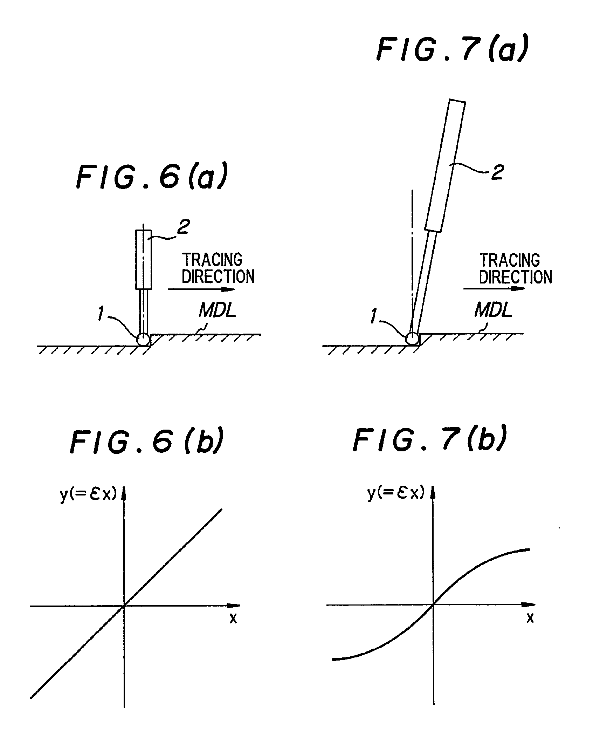

In detection of amount of displacement by the tracer head 2, ordinarily the method employed is one in which the stylus 1 is translated by the amount of displacement received by the stylus, with the distance traveled by the stylus being detected [see Fig. 6(a)]. Fig. 6(b) is a characteristic diagram in which output displacement with respect to input displacement in case of a short stylus is plotted along the X axis. Input displacement x corresponds to the actual amount of displacement acting upon the stylus 1, and output displacement corresponds to the displacement $\varepsilon_x$ actually detected by the tracer head 2. In the case where the stylus 1 is short, as shown, the amount of displacement y ($= \varepsilon_x$) detected by the tracer head 2 is proportional to the amount of displacement x received by the stylus 1.

In a case where the stylus used is long, as illustrated in Figs. 7(a), (b), the stylus undergoes rotation as well as translational motion owing to its own moment, and the detected amount of displacement $\varepsilon_x$ becomes smaller with respect to the displacement x actually received by the stylus 1. Thus, the proportional relationship between input displacement and output displacement no longer exists. Consequently, in the prior art, there is a restriction upon the length of the usable stylus, namely the length of the tracer head. If a tracer head which exceeds this restriction is used, detection error (referred to as "topple" error) occurs and the amount of displacement cannot be detected correctly.

Accordingly, an object of the present invention is to provide a tracer control method through which topple error can be corrected even if a long stylus or tracer head is used, thereby making it possible to employ a long tracer head.

Disclosure of the Invention

The present invention provides a tracer control method for tracing a model surface by detecting, by a tracer head, amounts of axial displacement acting upon a stylus. When a long stylus is used, the proportional relationship between actual amount of displacement and amount of displacement detected by the tracer head no longer holds and accurate tracer control can no longer be carried out. Accordingly, in a case where a long stylus is used, a correction function is obtained in advance, the detected amount of displacement is corrected by the correction function to thereby obtain a corrected amount of displacement proportional to the actual amount of displacement, and tracer control is executed in accordance with the corrected amount of displacement obtained.

Brief Description of the Drawings

Figs. 1(a) and (b) are schematic explanatory views of the present invention;

Fig. 2 is a block diagram of a tracer system according to the present invention;

Fig. 3 is a block diagram of a tracer control unit;

Fig. 4 is an explanatory view of theory showing another example of topple error correction;

Fig. 5 is a block diagram of a conventional tracer control unit;

Figs. 6(a), (b) are explanatory views showing output displacement versus input displacement in case of a short tracer head; and

Figs. 7(a), (b) are explanatory views showing output displacement versus input displacement in case of a long tracer head.

Best Mode for Carrying Out the Invention

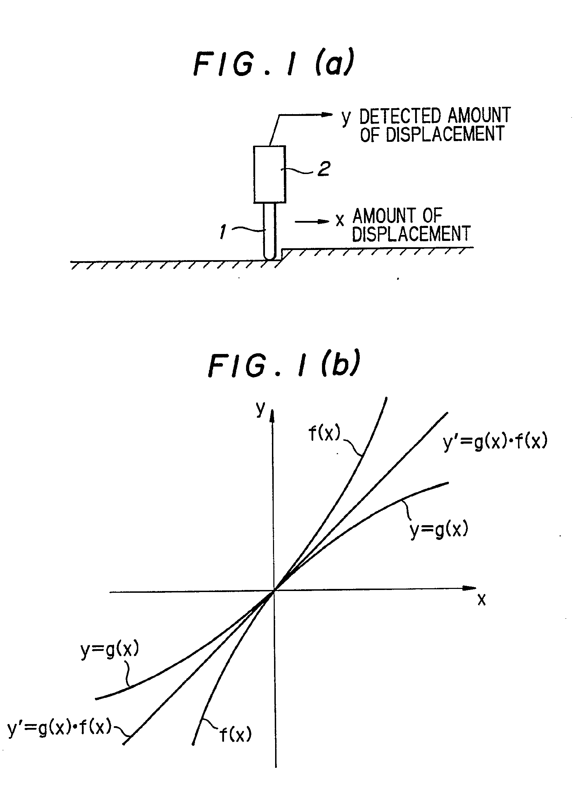

Figs. 1(a) and (b) are schematic explanatory views of the present invention, in which numeral 1 denotes a stylus and 2 a tracer head. MDL represents a model, x an amount of displacement acting upon the stylus 1, y a detected amount of displacement, g(x) a function in which detected amount of displacement y is expressed by the amount of displacement x, and f(x) a correction function.

Thus, with x being the amount of displacement, along a predetermined axis, acting upon the stylus 1 and y being the amount of displacement detected by the tracer head 2, the function g(x), in which the detected amount of displacement y is expressed by the actual amount of displacement x, is found. Then, by using the function g(x), the correction function f(x) is found that will render a linear relationship between the actual amount of displacement x and an amount of displacement y' obtained as a result of the correction. The surface of the model MDL is traced using a value, which is obtained by multiplying the detected amount of displacement y by f(x), as the corrected amount of displacement y'.

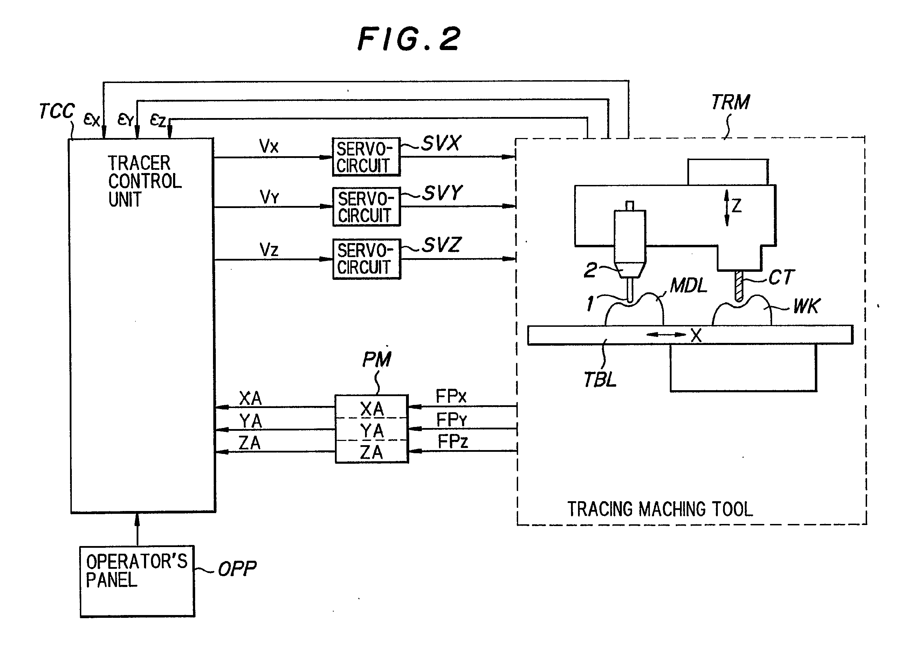

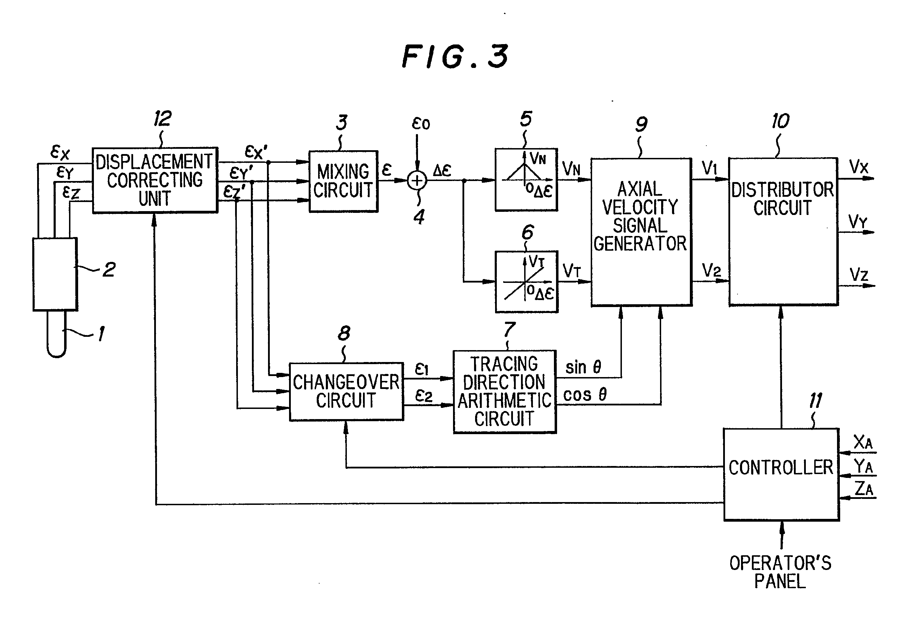

Fig. 2 is a block diagram of a tracer system according to the present invention, and Fig. 3 is a block diagram of a tracer control unit.

In Fig. 2, TRM represents a tracing machine tool, TCC a tracer control unit for executed tracer control, OPP an operator's panel for setting various data necessary for tracing, and SVX, SVY, SVZ servo-circuits for the respective axes.

The servo-circuits SVX - SVZ apply a D/A conversion to digitally provided velocity commands $V_x$ - $V_y$ from the tracer control unit TCC, and generate axial velocity commands for controlling the velocities of the servomotors (not shown).

PM denotes a position memory which monitors present positions $X_A$, $Y_A$, $Z_A$ along the respective axes by up/down counting, in dependence upon the direction of rotation, detection pulses $FP_x$ - $FP_z$ generated each time the motors of the respective axes rotate a predetermined amount.

The tracing machine tool is provided with the following, not shown:

(i)  X- and Y-axis motors for driving a table TBL along the X- and Y-axis directions, respectively; and

(ii)  a Z-axis motor for driving the tracer head 2 and cutter head CT along the Z-axis.

Also provided are pulse generators for generating single detection pulses $FP_x$, $FP_y$, $FP_z$ whenever the respective axial motors rotate a predetermined amount. The model MDL and workpiece WK are secured to the table TBL, and the prescribed tracing is performed by bringing the stylus 1, which is attached to the tracer head 2, into abutting contact with the surface of the model MDL. As is well known, the tracer head 2 detects amounts of displacement $\varepsilon_x$, $\varepsilon_y$, $\varepsilon_z$ of the surface of model MDL along the X, Y and Z axes.

In the profile control unit of Fig. 3, numeral 1 denotes the stylus, 2 the tracer head, 3 the mixing circuit, 4 the adder circuit, 5, 6 the velocity signal generators for generating the normal-direction velocity signal VN and the tangent-direction velocity signal VT, respectively, 7 the tracing direction arithmetic circuit, 8 the changeover circuit for outputting, as $\varepsilon_1$, $\varepsilon_2$, amounts of displacement forming the tracing control plane, 9 the axial velocity signal generator for generating velocity signals $V_1$, $V_2$ in axial directions forming the tracing control plane, 10 a pulse distributor circuit for distributing the velocity

signals $V_1$, $V_2$ to the abovementioned servo-circuits SVX - SVZ of the respective axes as velocity commands along the axes forming the tracing plane, 11 a controller for performing overall tracer control using the data necessary for tracer control, which has been set by the operator's panel OPP (see Fig. 2) and the present positions $X_A$, $X_B$, $X_C$ along the respective axes, and 12 a displacement correcting unit according to the invention for correcting the detected amounts of displacement.

The correcting operation performed by the displacement correcting unit 12 will now be described while referring to Figs. 1 through 3. In order to simplify the description, it will be assumed that the stylus 1 performs surface tracing along the X axis, that x represents the actual amount of X-axis displacement acting upon the stylus 1, and that y represents the amount of X-axis displacement $\varepsilon_x$ detected by the tracer head 2.

Before tracer control is performed, the stylus 1 is subjected to various displacements along the X axis (where the amount of displacement is expressed by x), and the amount of displacement y at such time is detected by the tracer head 2. Next, the function

$$y = g(x) \qquad \ldots (1)$$

in which the detected amount of displacement y is expressed by the actual amount of displacement x is calculated (see Fig. 1).

Calculated next using the function $y = g(x)$ is the correction function f(x) that renders linear the relationship between the actual amount of displacement x and the amount of displacement y' resulting from the correction. That is, the correction function f(x) that satisfies

$$y' = Kx \text{ (K is a constant)} \ldots (2)$$

is obtained. It should be noted that the correction function f(x) is obtained in the manner set forth hereinbelow. If the result of multiplying the detected amount of displacement y by the correction function f(x) is expressed by the detected amount of displacement y' that has been corrected, then the following equation will hold:

$$y' = y \cdot f(x) = g(x) \cdot f(x) \quad \ldots \quad (3)$$

Therefore, the correction function f(x) becomes as follows from Eqs. (2), (3):

$$f(x) = K \cdot x / g(x) \quad \ldots \quad (4)$$

When actual tracing machining is performed, the value y', which is obtained by multiplying the amount of displacement y detected by the tracer head 2 by the correction function f(x), is used as the amount of displacement at the time that tracer control is carried out. In other words, the x that satisfies y = g(x) is found, y is multiplied by the value obtained by substituting this x into f(x), thereby obtaining the corrected amount of displacement y', and tracing processing is executed based on y'.

In the foregoing, the displacement of the stylus 1 contacting the model MDL is subjected to the foregoing correction along each axis by the displacement correcting unit 12, during which time well-known tracing processing is executed by the remaining circuitry so that the axial velocities $V_1$, $V_2$ in the tracing control plane are generated. The cutter head CT is transported by these axial velocity signals $V_1$, $V_2$ to machine the workpiece WK in conformity with the profile of the model MDL, and the stylus 1 moves along the model. Similar processing is repeated thereafter so that tracer control may be executed in accordance with the amount of displacement y' corrected for topple error.

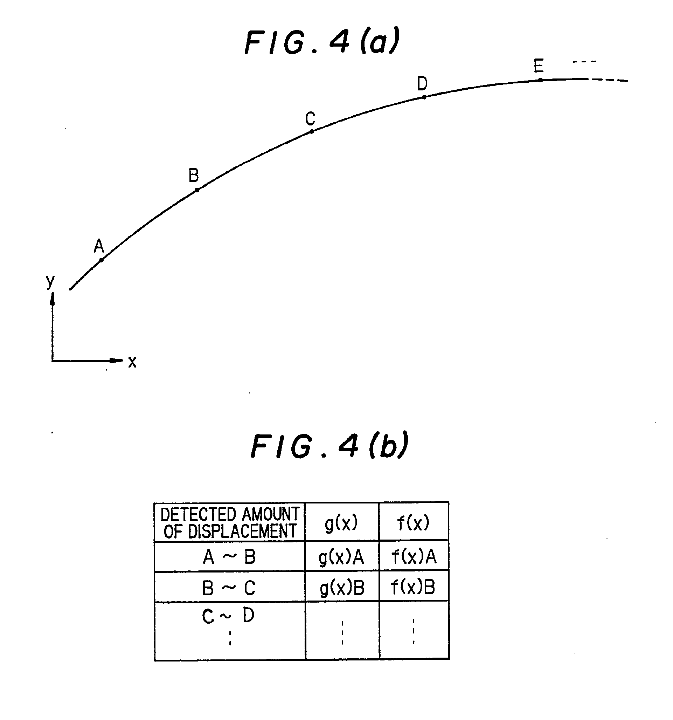

In the foregoing, it is described that the function g(x) is obtained theoretically. However, if the function cannot be found, then it is permissible to obtain g(x) by a polygonal approximation. Fig. 4 is an explanatory view of theory showing another example in which topple error is corrected by such a polygonal approximation.

For example, functions $g(x)_A$, $g(x)_B$, $g(x)_C$, $\cdots$ are obtained for respective regions A - B, B - C, C - D of detected amounts of displacement, correction functions $f(x)_A$, $f(x)_B$, $f(x)_C$, $\cdots$ are obtained for respective functions $g(x)_A$, $g(x)_B$, $g(x)_C$, $\cdots$, and tracing is performing using the value obtained by multiplying the detected amount of displacement y by a prescribed correction function f(x) as the amount of displacement. If such an arrangement is adopted, topple error in the detected amount of displacement can be corrected for even if the correction function f(x) cannot be found theoretically.

Thus, in accordance with the present invention, the arrangement is such that when x is the amount of displacement, along a predetermined axis, acting upon a stylus and y is the amount of displacement detected by a tracer head, a function g(x), in which the detected amount of displacement y is expressed by the actual amount of displacement x, is found, this function is used to find a correction function f(x) that will render a linear relationship between the actual amount of displacement x and an amount of displacement y′ obtained as a result of the correction, and tracing is performed using a value, which is obtained by multiplying the detected amount of displacement y by f(x), as the corrected amount of displacement y′. As a result, topple error of the tracer head can be corrected and it is possible to use a long stylus, namely a long tracer head.

CLAIMS:

1.    A tracer control method for tracing a model surface by detecting, by a tracer head, amounts of axial displacement acting upon a stylus, characterized by:

obtaining a function g(x), in which a detected amount of displacement y is expressed by an actual amount of displacement x, where x is an amount of displacement, along a predetermined axis, acting upon said stylus and y is an amount of displacement detected by said tracer head;

obtaining a correction function f(x), by using said function g(x), that will render a linear relationship between the actual amount of displacement x and an amount of displacement y' which is a correction of the detected amount of displacement y;

obtaining the corrected amount of displacement y' by multiplying the detected amount of displacement y by f(x); and

executing tracer control using said corrected amount of displacement y'.

2.    A tracer control method according to claim 1, characterized in that said correction function f(x) is obtained in accordance with the following equation using the function g(x):

f(x) = K·x/g(x), where K is a constant.

3.    A tracer control method according to claim 1, characterized by performing a polygonal approximation of said function g(x), obtaining the correction function f(x) for every polygonal line and storing the correction function, and obtaining the corrected amount of displacement y' using a predetermined correction function conforming to the magnitude of the detected amount of displacement y.

# FIG. 1 (a)

y DETECTED AMOUNT
OF DISPLACEMENT

2

1

x AMOUNT OF
DISPLACEMENT

# FIG. 1 (b)

y

f(x)

y'=g(x)·f(x)

y=g(x)

x

y=g(x)

y'=g(x)·f(x)

f(x)

# FIG. 2

TCC

TRACER CONTROL UNIT

$\epsilon_X$  $\epsilon_Y$  $\epsilon_Z$

Vx → SERVO-CIRCUIT ~ SVX

Vy → SERVO-CIRCUIT ~ SVY

Vz → SERVO-CIRCUIT ~ SVZ

TRM

Z

2

1

MDL

CT

WK

X

TBL

TRACING MACHING TOOL

PM

XA ← XA ← FPx

YA ← YA ← FPy

ZA ← ZA ← FPz

OPERATOR'S PANEL ~ OPP

EP 0 386 251 A1

# FIG. 3

EP 0 386 251 A1

# *FIG. 4 (a)*

# *FIG. 4 (b)*

| DETECTED AMOUNT OF DISPLACEMENT | g(x) | f(x) |
|---|---|---|
| A ~ B | g(x)A | f(x)A |
| B ~ C | g(x)B | f(x)B |
| C ~ D ⋮ | ⋮ | ⋮ |

# FIG.5

FIG.7 (a)

FIG.6 (a)

FIG.6 (b)

FIG.7 (b)

# INTERNATIONAL SEARCH REPORT

International Application No PCT/JP89/00677

## I. CLASSIFICATION OF SUBJECT MATTER (if several classification symbols apply, indicate all) [6]

According to International Patent Classification (IPC) or to both National Classification and IPC

Int. Cl$^4$     B23Q33/00

## II. FIELDS SEARCHED

### Minimum Documentation Searched [7]

| Classification System | Classification Symbols |
|---|---|
| IPC | B23Q33/00, B23Q35/121 - 126 |

### Documentation Searched other than Minimum Documentation to the Extent that such Documents are Included in the Fields Searched [8]

| | |
|---|---|
| Jitsuyo Shinan Koho | 1921 - 1988 |
| Kokai Jitsuyo Shinan Koho | 1971 - 1988 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, U, 63-79147 (Mitsubishi Heavy Industries, Ltd.) 25 May 1988 (25. 05. 88) (Family : none) | 1, 2 |
| A | JP, A, 61-33846 (Fanuc Ltd.) 17 February 1986 (17. 02. 86) Column 6, line 2 to column 7, line 4 (Family : none) | 1 |
| A | JP, B2, 60-10862 (Fanuc Ltd.) 20 March 1985 (20. 03. 85) Column 1, line 15 to column 2, line 20 & EP, B1, 41382 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 20, 1989 (20. 09. 89) | October 2, 1989 (02. 10. 89) |

| International Searching Authority | Signature of Authorized Officer |
|---|---|
| Japanese Patent Office | |

Form PCT/ISA/210 (second sheet) (January 1985)